(19) Europäisches Patentamt
European Patent Office
Office européen des brevets

(11) **EP 2 098 849 B1**

(12) # EUROPEAN PATENT SPECIFICATION

(45) Date of publication and mention of the grant of the patent:
**15.05.2013 Bulletin 2013/20**

(51) Int Cl.:
***G01M 11/02*** *(2006.01)*

(21) Application number: **08425134.7**

(22) Date of filing: **04.03.2008**

(54) **Test apparatus usable to measure stray light in electro-optical apparatuses**

Prüfvorrichtung zur Messung von Streulicht in elektrooptischen Vorrichtungen

Appareil d'essai utilisé pour mesurer la lumière parasite dans des appareils électro-optiques

(84) Designated Contracting States:
**DE FR GB IT**

(43) Date of publication of application:
**09.09.2009 Bulletin 2009/37**

(73) Proprietor: **SELEX ES S.P.A**
**00187 Roma (RM) (IT)**

(72) Inventor: **Barilli, Marco**
**50036 Vaglia**
**Firenze (IT)**

(74) Representative: **Mannucci, Michele et al**
**Ufficio Tecnico Ing.A. Mannucci**
**Via della Scala 4**
**50123 Firenze (IT)**

(56) References cited:
**DE-A1- 10 332 110 DE-B3-102006 019 468**

- **BLARRE L ET AL: "Stray light characterization of optical systems" SPECIFICATION, PRODUCTION, AND TESTING OF OPTICAL COMPONENTS AND SYSTEMS 13-16 MAY 1996 GLASGOW, UK, vol. 2775, 1996, pages 279-286, XP002491687 Proceedings of the SPIE - The International Society for Optical Engineering SPIE-Int. Soc. Opt. Eng USA ISSN: 0277-786X**
- **TSUSAKA Y ET AL: "Characterization of the Advanced Satellite for Cosmology and Astrophysics X-ray telescope: preflight calibration and ray tracing" Applied Optics USA, vol. 34, no. 22, 1 August 1995 (1995-08-01), pages 4848-4856, XP002491688 ISSN: 0003-6935**

EP 2 098 849 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

Technical field

The present invention relates to an equipment, i.e. to an apparatus for radiometric measurement, although absolute, of the stray light to which each electro-optical device is potentially exposed when it is illuminated by sources inside/outside its field of view.

Base of the invention

For better understanding the present invention, the main features thereof and the main advantages which can be achieved thereby, it is necessary briefly to stress some fundamental concepts of a measurement of stray light and, in particular, the preliminary definition of its physical merit function.

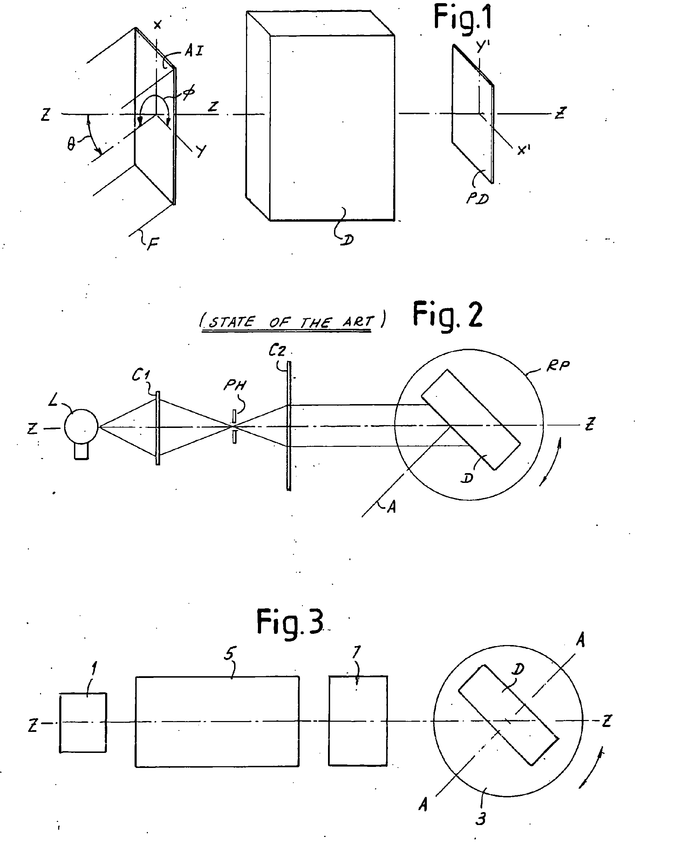

With reference to figure 1, each electro-optical device can be characterized by one or more geometrical entrance apertures (AI) and by one or more detection planes (PD). In the diagram of figure 1, F indicates a generic input beam and A-A indicates the optical axis of the electro-optical device (D, PD).

Regardless of the shape of the entrance aperture and of the type of the detection plane (single detector, array or matrix detector), the merit function normally used to measure the sensitivity of an equipment to the stray light is the ratio between the energy density measured on the image plane and the energy density (a constant) measured at the plane of the entrance aperture of the device (not necessary coinciding with the optical aperture thereof, for example the entrance pupil thereof).

This merit function is called SPST (Spatial Point Source Transmittance) and is defined through the use of the following function:

$$SPST(X',Y',\lambda,\theta,\varphi)=\frac{I_{Detector}(X',Y',\lambda,\vartheta,\varphi)}{I_0}=\left[\frac{W/mm^2}{W/mm^2}\right]=Pure\ number$$

where I and $I_0$ are the energy densities (measured in $W/mm^2$ on the image plane and at the aperture of the optical system) in which the dependence on the coordinates X', Y' of the detection plane PD, on the wavelength $\lambda$ of the radiation F, on the angular coordinates altitude $\vartheta$ and azimuth $\varphi$, "off axis", of illumination, are evident. In the particular case of devices provided with rotational symmetry, the number of dependence parameters is reduced from five to four. In these cases the energy density ratio can be defined excluding the dependence on the angle parameter azimuth $\varphi$.

The knowledge the SPST, ideally in each position, for each wavelength and for each off-axis angle, allows to determine the response to the stray light regardless of the body, extended or point-like, of the optical device in question. In fact, the SPST constitutes the two-dimensional mapping, the "transfer function", when the stray light of the system is stimulated by a point source at infinity. Any extended object, external source of stray light for the device, can be reconstructed through directional convolution on $\vartheta$ and $\varphi$ relative to the "impulsive" response of the system.

For practical or exhibitive reasons, it is usual not to provide the 2D mapping of the stray light pattern, but only some associated statistical parameters. For example, the literature frequently refers to the use of the PST (Point Source Transmittance) function, defined, depending on the case and with the same meaning of the dependence parameters, as maximum or mean value of the SPST for a given interval of wavelengths and of angular positions of external illumination. These definitions, which are practical and simple to use, e.g. as function of the off-axis directions, do not show the nature of the phenomena that take place inside the device.

Often, in the presence of a phenomenon of unwanted light, the system analyst or designer must make use of a detailed system analysis based on "a priori" assumptions or "best guesses" of the possible causes that produced stray light. In these circumstances, the search operation is the outcome of tests, on supposed causes that complete mapping of the stray light pattern alone is not able to deterministically show.

To date, the method for measuring stray light produced by external sources takes place through the implementation of an illuminator in quasi-collimated light, typically "white" light (relative to the spectral interval of interest), and the instrument under test is positioned in various angular positions, in correspondence of the beam produced by this illuminator.

Often, the stray light measurement process assumes the meaning of a "pass/fail test", and, even when a radiometric characterization is required, equipment dedicated to illuminance is almost never generic, in other words applicable to instruments characterized by different physical dimensions and with non rotational-symmetrical apertures. In brief, for each device it is necessary to use a dedicated illuminator. An example of an apparatus for this kind of measurement is disclosed in Blarre et a.l: "Characterization of optical system" - Specification, production, and testing of optical components and systems 13-16 May 1996 Glasgow, UK, vol. 2775, 1996, pages 279-286.

Prior art stray light measuring devices are known from L. Blarre, A. Mestreau, "Stray Light characterization of optical systems", SPIE Vol 2775, p.279 ; DE 102006 019468B3;

DE 103 32 110 A1; Y. Tsusaha et al. "characterization of the advanced satellite for cosmology and astrophysics X-ray telescope : preflight calibration and testing", Appl. Optics, Vol. 34, No. 22, p. 4848 (1995).

The following figure 2 is helpful to understand this concept. A generic electro-optical device (D) with an optical axis (A-A), provided with its detector, is positioned downstream of a lighting system, schematically comprising a light source (L), a condenser (C1), a pin hole (PH) and a collimator (C2). In general, the electro-optical device (D) is arranged on a platform (RP) which is rotating on one or two axes, in such a way as to determine altitude and azimuth of the external radiation with respect to its own optical axis (A-A).

As a rule, the stray light measurement takes place according to the following procedure:

- firstly a radiometric characterization of the source is performed when monitored downstream of the collimator;
- subsequently, the device (D) is illuminated and the radiation pattern obtained for a certain angle is recorded on the detector of the instrument (generally, but not necessary, a matrix detector);
- the pattern obtained, normalized to the values of the energy density output from the collimator, is the SPST measurement.

Although set forth in an extremely simplified manner, this type of measurement of the stray light has the advantages of:

- being of simple practical implementation;
- providing an immediate "mapping" of the stray light pattern and thus useful for the purposes of pass/fail testing of the device;

Nonetheless, it has the following disadvantages:

1. the test equipment, in particular the lighting system, varies from case to case, from device to device, both for reasons related to dimension (e.g. the dimension of the collimated beam can vary from a few mm to several hundreds of mm), and for "morphological" reasons of the collimated beam produced, i.e. linked to the attitude, through suitable masks, to reproduce the mechanical profiles of the entrance apertures of the device under test (not necessarily with rotational symmetry);
2. the collimated beam almost never presents good properties of uniformity; between the centre and the edges thereof there can be variations of intensity linked to diffraction phenomena, or to excessive simplification of the lighting apparatuses without resorting to costly and burdensome apodization operations;
3. it does not provide any indication of the causes of the stray light, if present in unacceptable amounts; in fact, the system analyst/designer is obliged to explain through guessed models what has been phenomenologically observed; this is often a tedious job and is not free from errors or from erroneous interpretations of the simulated processes;
4. lastly, but not least, this approach presupposes the availability of suitable rooms generally of large dimensions (such as dark rooms), as the production of extended collimated beams for the purposes of analyzing stray light presupposes minimization or screening with commonly used devices such as black card or blackened sheet metal acting as light traps, external stray light sources also produced indirectly by the actual lighting device.

## Summary of the Invention

According to an aspect, the invention provides an apparatus for measuring stray light, which completely or partially overcomes one or more of the above mentioned problems and other disadvantages and drawbacks of conventional equipment for measuring stray light.

The apparatus according to the invention is defined in claim 1.

Substantially, according to one aspect, the invention provides an apparatus for measuring the stray light in electro-optical devices, comprising:

- a support to support a device, on which the measurements are to be performed;
- a light source;
- a scanning system to move according to at least two scanning axes a light beam produced by said source with respect to the electro-optical device.

With such a system it is possible to scan the whole aperture of the device under test, or a part thereof, with a light beam of adequate dimensions, instead of illuminating the whole aperture with an extended beam, as occurs in the conventional devices. For each position of the light beam it is possible to detect whether stray light phenomena are generated inside the device, for example due to design defects, treatment defects (coating) of internal components or the like. In this way, identification of the defect is much easier compared to what occurs with conventional test systems. According to the invention, the dimension of the transverse cross section of the beam can be set by the operator, so as to perform coarser or finer scanning. A first coarse scan, carried out with a beam of greater transverse dimensions, can be useful in a first phase to check for the occurrence of stray light phenomena. If these are present, the portion of the entrance aperture of the device corresponding to the section of the beam used in this first phase can be investigated with a fine scan, using a beam with a smaller transverse cross section, to identify with greater precision the position and the orientation of the beam that gives rise to the generation of stray light and thus locate the originating factor with greater speed.

Preferably, the test apparatus provides that the support on which the device to be analyzed is positioned, is provided with an oscillating movement about an axis or about two axes. This allows the measurement to be repeated for variable azimuth and altitude angles. Oscillation about a single axis is sufficient for devices with rotational symmetry.

In some embodiments the light source can be a laser source. In other embodiments it is possible to use a white-light source, or other. In general, the light source can also be arranged at a distance from the scanning system, and even in a different environment with respect to that in which the device under test with its support is located. The light radiation can be conveyed toward the scanning system through a suitable light guide, for example an optical fiber light guide, or in another way. Between the source and the scanning system conditioning members for conditioning the beam can be arranged. Conditioning is intended in general as any operation of filtration, of expansion or reduction of the beam, of collimation, focusing or other that is necessary or useful to obtain an exiting light beam with the desired characteristics.

Further advantageous features and embodiments of the apparatus according to the present invention will be described below, with reference to a non-limiting embodiment of the invention.

The invention also concerns a method according to claim 16.

<u>Brief Description of Drawings</u>

The invention shall be better understood by following the description and the accompanying drawing, which schematically shows a non - limiting practical embodiment of the invention. More in particular, in the drawing:

figures 1 and 2 (already described) show a diagram of an electro-optical device and a diagram of a conventional apparatus for measuring stray light;
figure 3 shows a block diagram of an apparatus according to the present invention;
figure 4 shows a diagram of the scanning system;
figure 4A shows an enlargement of the reflecting mirrors or prisms of the scanning system of figure 4;
figure 5 shows a diagram of the source and of the devices arranged between it and the scanning system; and
figure 6 shows diagrams which illustrate the sampling methods of a circular aperture of an electro-optical device under test.

<u>Detailed Description of the Present Invention</u>

Figure 3 shows a block diagram which represents the main components of an apparatus according to the present invention. Schematically, number 1 indicates an electro-magnetic radiation source, which can be a monochromatic source, for example a laser source, or a broad-spectrum source, for example a white-light source, depending on the types of measurements to be carried out.

Between the source 1 and a rotating platform 3, on which is arranged a generic electro-optical device D on which to perform the stray light test and of which Z-Z indicates the optical axis, is positioned a group of components schematically indicated by the number 5, which have the function of conditioning the optical beam exiting from the source 1. Between the group 5 and the device D on which the measurement must be performed a scanning head is positioned, schematically indicated with the number 7.

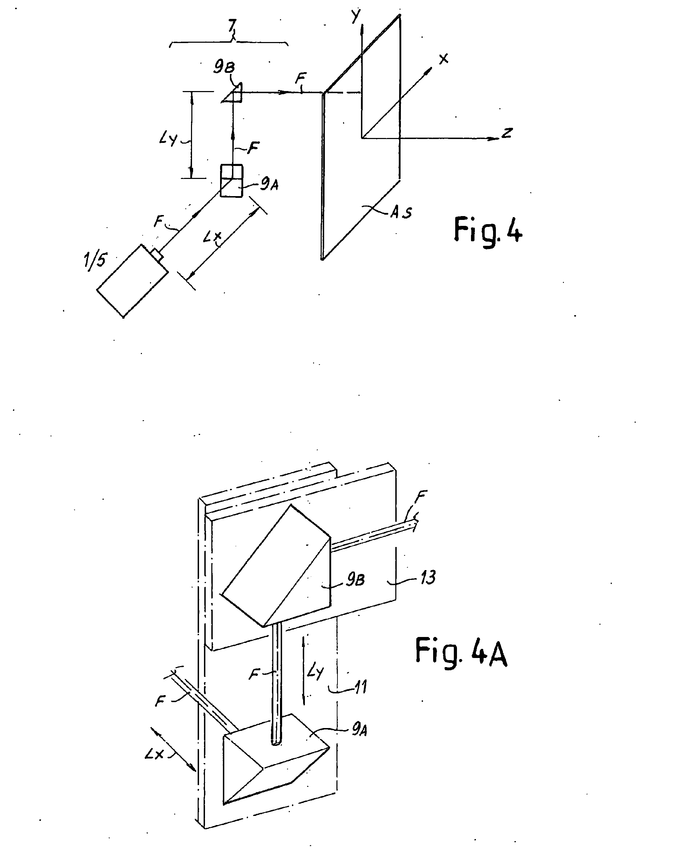

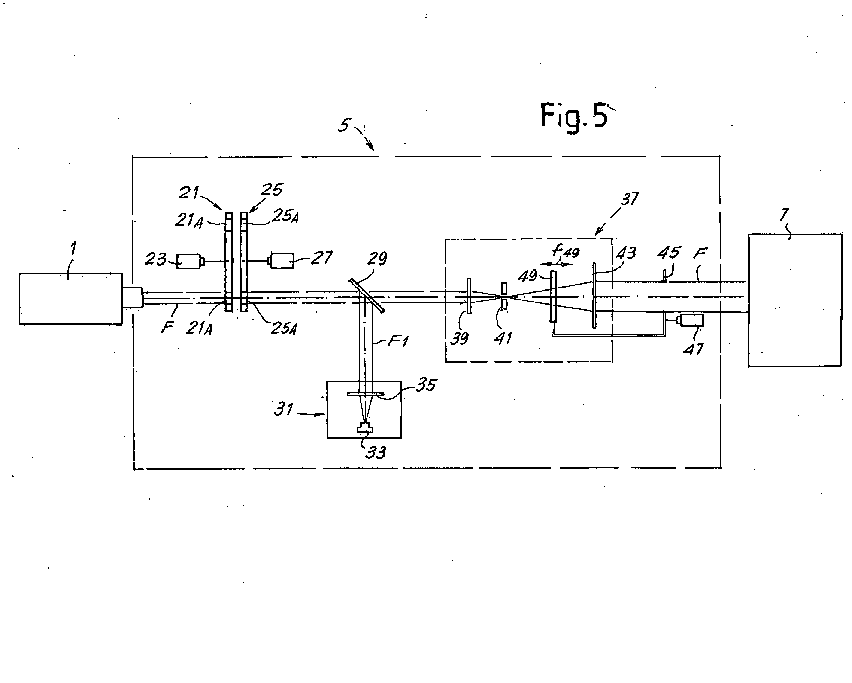

Figure 4 and the enlargement of figure 4A schematically show the elements of the scanning head 7 and 1/5 schematically represents all the members constituted by the source 1 and by the components of the group 5 which will be described in more detail with reference to figure 5.

AS indicates a scanning plane or area over which moves the electro-magnetic radiation beam F coming from the group 1/5. X, Y and Z indicate the Cartesian axes which define the scanning plane or scanning area AS, the axis Z being parallel to the optical axis Z-Z of the lighting system.

The collimated electro-magnetic radiation beam F coming from the group 1/5 is reflected by a first mirror or by a first right prism or other reflecting element 9A and subsequently by a second mirror or by a second right prism or other reflecting element 9B. The reflected beam is preferably orthogonal to the scanning plane AS and is directed toward the device D, which is arranged on the rotating platform 3 of the apparatus of figure 3.

In the illustrated example (see also in particular figure 4A) the reflecting elements 9A, 9B are constituted by right prisms, but it should be understood that (although this is currently a particularly advantageous embodiment) other reflecting components can be used for this function.

In some embodiments, the two optical prisms 9A, 9B are arranged on a common slide schematically indicated by the number 11 in figure 4A, which is guided along a guiding system, not shown, to move along the direction LX parallel to the beam F coming from the source group 1/5. The movement LX represents the first scanning movement in the plane AS, parallel to the Cartesian axis X. On the slide 11 a second slide is arranged, which is schematically indicated with the number 13 and is movable according to the double arrow LY with respect to the slide 11 and carrying the second optical prism or other reflecting element 9B, so that this latter can move according to LY with respect to the reflecting element or optical prism 9A. The movement LY is the second scanning movement along the axis Y of the scanning plane AS. With this double scanning movement it is therefore possible to obtain the displacement of the beam F parallel to itself and orthogonal to the scanning plane AS.

This configuration of the scanning group 7 is particularly advantageous, as the beam F, directed toward the device D under test, always maintains its own direction parallel to the optical axis Z-Z of the measurement apparatus. It is also possible, in less advantageous embodiments, to use other configurations of the scanning system, for example oscillating mirrors. These systems are more rational from the point of view of mechanical construction but introduce an inclination of the beam, which is variable depending on the position in the scanning plane.

The beam F presents a transverse dimension which is reduced and, according to some embodiments, adjustable according to the measurement requirements. Scanning of the area AS with this beam of limited dimension allows to sample the entrance apertures of the devices D under test, i.e. to send to positions determined by the coordinates of the scanning system 7 a thin beam of light to verify whether phenomena of stray light are generated in each position determined by the scanning system inside the device D under test. Contrary to conventional systems, therefore, the whole aperture of the device is not illuminated with a wide beam, but illumination is performed in narrow areas and ideally in points, which allows more immediate analysis of the stray light phenomena and thus facilitates identification of their causes. A further advantage of this way of operating is given by the fact that a concentrated beam with a high light intensity can be obtained, to identify stray light phenomena of even weak or very weak intensity, which with normal extended beam systems are detectable only with difficulty due to the excessively high light power that would be required to obtain the same light energy per surface unit obtainable with sources of even weak intensity but which generate beams of small dimensions.

The movements LX and LY can be appropriately controlled through actuators driven by a processing unit by means of which the beam F can be controlled to follow any trajectory according to profiles suitable to be described by parametric equations in the plane X, Y, thus obtaining scanning areas of any dimension and shape.

In an automated manner, through the use of motorized actuators, the lighting system can flexibly perform a sampling of the physical aperture of the device D regardless of its shape. By way of non-limiting example, one of the operating methods is that of performing a two-dimensional mapping of the whole aperture of the optical system. The scanning mechanism controlled by adequate actuators with suitable mechanical reduction ratios is capable of performing sampling of extended apertures or apertures of small dimensions, allowing the operator to define the profile of interest and the fineness of sampling.

As previously noted, the source schematically indicated by the number 1 in figure 3 can be a laser source or an extended source, for example an incandescent lamp, in the first case obtaining a monochromatic beam and, in the second case, a white-light beam which can then be appropriately filtered and focused.

Figure 5 schematically indicates the components, which can be provided in the group 5 interposed between the actual source and the scanning head 7, in order to condition the beam F exiting from the source 1. In the example illustrated, the source 1 is a laser source. According to some embodiments, at the exit of the source 1 is placed a filter wheel 21, which supports one or more filters which can be inserted in the optical path of the beam F coming from the source 1. According to some embodiments, the filter wheel 21 is actuated in rotation by a motor 23, without however excluding the possibility of performing this movement manually. Rotation of the filter wheel 21 positions in the optical path of the beam F one or other of a plurality of filters 21A carried by said wheel 21. One position of the wheel can be without filters to allow passage of the unfiltered beam F.

According to some embodiments of the invention, downstream of the filter wheel 21 is positioned a polarizer wheel 25 whereon there are arranged one or more polarizing filters 25A which can be selectively inserted in the optical path of the beam F. According to some embodiments the polarizer wheel 25 is actuated in rotation by a motor 27, without however excluding the possibility of performing this rotation and thus the selection of the polarizer manually.

Continuing along the optical path of the beam F from the source 1 toward the scanning head 7, in some embodiments a dichroic mirror or beam separator 29 is provided, which deflects a part F1 of the optical beam toward a control group 31 for controlling the stability of the source. In some embodiments the group 31 comprises a photodiode 33 or other sensitive element on which the deflected beam F1 is focused by a focus lens or condenser 35. The control group 35 for controlling the stability of the source 1 thus allows to monitor in a continuous manner that the beam F maintains the properties of intensity and the spectral characteristics thereof. The control group for controlling the stability of the source can be interfaced to a control unit which acts with a feedback loop on the source 1 to correct any deviation of the optical characteristics of the beam F.

According to the present invention, downstream of the dichroic mirror 29 along the path of the beam F toward the scanning head 7, an expander group 37 is provided for expanding the beam. The beam expander group 37 comprises a focus lens or condenser 39, a spatial filter 41, a collimator 43 and an iris 45. Therefore, at the exit of the collimator 43 there is a collimated beam F, which presents an expanded dimension (i.e. with greater diameter) with respect to the dimension of the beam F coming from the source 1.

According to some embodiments, the iris 45 presents a variable aperture, i.e. a variable diameter to modify the diametric dimension of the beam exiting toward the scanning head 7. The iris 45 is preferably motorized through a motor 47, which controls the diametric dimension of the aperture of the iris and thus the diametric dimension of the beam that, ultimately, will scan the entrance aperture of the device D under test.

In this way, by acting through the iris 45 on the dimension of the beam, it is possible to perform fine or coarse sampling of the entrance aperture of the electro-optical device under test.

According to some advantageous embodiments, in the beam expander group, and in particular between the spatial filter 41 and the collimator 43, is provided an apodizing filter 49, preferably interlocked to the iris 45 and movable along the arrow f49 depending on the diameter of said iris. In this way, thanks to the apodizing filter 49, a beam of the desired diametric dimension, of stable intensity, appropriately polarized and filtered and with a substantially constant intensity in the various points of the transverse cross section of said beam is ultimately obtained at the exit of the iris 45.

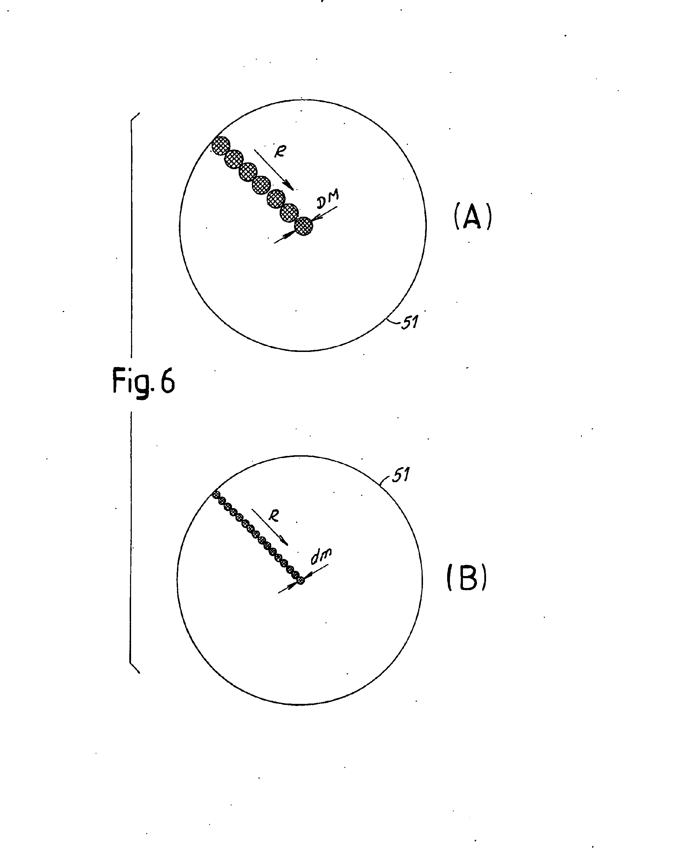

Figures 6A and 6B schematically show a circular aperture 51 of a generic electro-optical device D on which the measurements of stray light must be performed, schematically showing the method of sampling of this aperture through radial scanning according to a radial direction R, obtained through the movements of the scanning head 7 and by using a beam F of different diameters in the two hypotheses indicated in (A) and (B). More in particular, in the diagram of figure 6A a beam F of relatively high diameter DM is used for low resolution sampling. The diameter DM can be in the order of 15-20 mm. The spatial filtering and apodization operations obtained with the beam expander group 37 are dimensioned to ensure uniformity of the beam emerging at the maximum aperture available with uniformity within approximately 1%. Figure 6B shows the sampling with a beam of smaller diameter dm. In practice, a coarse scan or sampling can be performed with a beam of larger diameter DM (figure 6A) to identify any criticalities, i.e. any generation of stray light inside the device D for one or more positions of the beam and, for each position in which this occurs, fine sampling can then be performed as in figure 6B to perform punctual analysis only in the area in which situations of criticality occurred in order to identify any elements inside the device D that are responsible for generation of the stray light. It is understood that this sampling can be performed for each angular position that the device D can be made to assume through the rotating platform R. If this does not have rotational symmetry it is possible to use two rotation angles of the rotation platform R, i.e. it will be possible to use a double rotating platform. The measurement can be repeated for each angle assumed by the device D and/or for each wavelength of interest.

Roughly, the operation to measure the SPST by means of the apparatus described above takes place through the following steps:

1. the electro-optical device D to be tested is positioned on the rotating motorized platform(s) R and positioned at the first useful angle within the interval of the angular values $\theta$ and $\phi$ of interest;
2. having fixed the directions of exploration of the incident light, through the automatism interlocked to a personal computer, scanning of the whole aperture of the device D is performed through the interlocks X/Y of the right prisms 9A, 9B or other reflecting devices of the scanning head 7;
3. for each of the positions X/Y of the beam F, an irradiance matrix (or an array or a point according to the type of detector used) is stored, in general the same used on the device D; alternatively, i.e. in the absence of this detector "belonging" to the device D, the image plane can in turn be sampled through a further scanning mechanism X'/Y' analogous to that described above with reference to figures 4, 4A;
4. the irradiance matrix at the current positions X/Y of the beam F will be added to the matrices obtained in other positions and normalized to the number of the positions explored and to the radiation value of the beam emerging downstream of the investigated instrument;
5. the resulting matrix "sum" or "convolution" of the matrices relative to each position is the measurement of the SPST of the system at the current illumination angles;

6. the procedure, with cycle in steps defined by the operator, is repeated upon completion of the angle scan on the directions of illumination required.

In the case of identification of a failure due to stray light, the equipment allows to investigate the primary sources. In general, these are to be sought in the erroneous or excessively small dimensional allocation of the opto-mechanical elements of the device. Often, the quality of an anti-reflection coating that has, for example, deteriorated through use or even only "flaking" due to incorrect application of the substrates, constitute probable causes which however are difficult to locate "by sight".

In these circumstances the equipment proposed according to the invention is able to perform a "reasoned" selection of the directions and of the positions of the beams that produced a stray light signal.

Maintaining a "memory" through an automatic mechanism of the irradiance maps relative to each direction of the beams and above all relative to their location X/Y that produced "bad" profiles of stray light allows "sub exploration" of the portions of the aperture of the instrument that produced it. To sum up, it will be sufficient to "map" with beams of smaller dimensions with respect to those used for the single measurement, only the areas of interest, in which the unwanted signal was produced.

Restriction, in angle and in position, to only the beams that produced stray light is a very powerful instrument at the disposal of the designer/analyst of the opto-mechanical system. In fact, it will be sufficient to have access to this information to trace, practically in real time, the accurate behavior of the device under test, drastically reducing the set of possible interactions between light and opto-mechanical model, so as to identify the causes.

It is understood that the drawing only shows an example provided by way of a practical arrangement of the invention, which can vary in forms and arrangement without however departing from the scope of the concept underlying the invention. Any reference numbers in the appended claims are provided purely to facilitate reading thereof in the light of the preceding description and of the accompanying drawing, and do not limit the scope of protection represented by the claims.

## Claims

**1.** An apparatus for measuring the stray light in electro-optical devices of the type with one or more geometrical entrance apertures and with one or more detection planes, said apparatus including:

- a support (3) to support an electro-optical device (D) on which the measurements are to be performed, said support (3) rotating around at least one axis;
- a light source (1);
- a scanning system (7) to move according to at least two scanning axes (X, Y) a light beam (F) produced by said source (1) with respect to the device (D), said scanning system (7) being positioned between said support (3) and said light source (1), said scanning system (7) being designed to scan the whole aperture of the electro-optical device (D) under test, or a part thereof, with said light beam (F);
- between said light source (1) and said scanning system, members (43) for varying the diameter of the light beam, such that the dimension of the transverse cross section of the beam (F) can be set by the operator, so as to perform coarser or finer scanning, said members for varying the diameter of the light beam including: a beam expander (37) with a condenser (39), a collimator (4) and a spatial filter (41) arranged between the condenser (39) and the collimator (43); and an iris (45) with a variable diameter.

**2.** An apparatus as claimed in claim 1, wherein: said support (3) to support the electro-optical device (D) under test is a rotating platform; between said light source (1) and said rotating platform (3) is positioned a group of components (5) which have the function of conditioning the optical beam exiting from said source (1); between said group (5) and said device (D) on which the measurement must be performed a scanning head (7) is positioned.

**3.** An apparatus as claimed in claim 1, or 2, wherein said scanning system (7) comprises two orthogonal scanning axes, to move the light beam (F) in a scanning plane.

**4.** An apparatus as claimed in claim 3, wherein said scanning system (7) maintains the beam (F) parallel to itself and substantially orthogonal to the scanning plane.

**5.** An apparatus as claimed in one or more of the previous claims, wherein the scanning system (7) comprises a pair of reflecting surfaces (9A, 9B) movable along two scanning axes.

**6.** An apparatus as claimed in claim 5, wherein a first slide supports said pair of reflecting surfaces (9A, 9B) and is movable along a first translation axis, substantially parallel to the incidence direction of said beam (F) coming from the light source (1) on a first of said reflecting surfaces, and in which a second of said reflecting surfaces is movable with respect to said first reflecting surface along a second axis of translation.

**7.** An apparatus as claimed in claim 6, wherein said first and said second axis of translation are substantially orthogonal.

**8.** An apparatus as claimed in one or more of the previous claims, wherein said light source (1) is fixed with respect to a structure bearing said support.

**9.** An apparatus as claimed in one or more of the previous claims, wherein said source (1) is a laser source.

**10.** An apparatus as claimed in one or more of the previous claims, wherein said light source (1) is interchangeable.

**11.** An apparatus as claimed in one or more of the previous claims, including one ore more of the following components: a system of filters between the source and the scanning system, a polarizer system (25) between the source and the scanning system, a control group (31) for controlling the stability of the source.

**12.** An apparatus as claimed in one or more of the previous claims, including an apodizing filter (49) arranged between said light source 81) and said scanning system (7).

**13.** An apparatus as claimed in one or more of the previous claims, wherein said iris with variable diameter is motorized.

**14.** An apparatus as claimed in claim 12, wherein said iris (45) with variable diameter is connected to said apodizing filter (49), the position of the apodizing filter (49) being adjustable depending on the diameter of the aperture of the iris (45).

**15.** An apparatus as claimed in one or more of the previous claims, wherein the components of the apparatus are arranged in such a manner that a measuring of the radiation value is performed on the light beam (F) emerging downstream of the investigated instrument (D).

**16.** A method for performing stray light measurements on electro-optical devices, of the type with one or more geometrical entrance apertures and with one or more detection planes, with an apparatus according to one or more of the preceding claims, including the steps of:

- scanning the whole aperture of the device under test, or a part thereof, with a light beam of adequate dimensions,
- for each position of the light beam, detecting whether stray light phenomena are generated inside the device,

wherein the dimension of the transverse cross section of the beam is set by the operator, so as to perform a coarser and a finer scanning, a first coarse scan being carried out with a beam of greater transverse dimensions in a first phase to check for the occurrence of stray light phenomena; and wherein if stray light phenomena are present, the portion of the entrance aperture of the device corresponding to the section of the beam used in said first phase is investigated with a finer scan, using a beam with a smaller transverse cross section, to identify with greater precision the position and the orientation of the beam that gives rise to the generation of stray light and thus locate the factor originating said stray light.

**17.** Method according to claim 16, comprising the following steps:

- positioning the electro-optical device (D) to be tested on a rotating motorized platform (R) and positioned at the first useful angle within the interval of the angular values $\theta$ and $\phi$ of interest;
- having fixed the directions of exploration of the incident light, through the automatism interlocked to a computer, scanning of the whole aperture of the device (D) is performed through the interlocks X/Y of right prisms (9A, 9B) or other reflecting devices of a scanning head (7);
- for each of the positions X/Y of the beam (F), storing an irradiance matrix, or an array or a point according to the type of detector used;
- adding the irradiance matrix at the current positions X/Y of the beam (F) to the matrices obtained in other positions and normalizing to the number of the positions explored and to the radiation value of the beam emerging downstream of the investigated instrument;

- determining the measurement of the SPST of the system at the current illumination angles as the resulting matrix "sum" or "convolution" of the matrices relative to each position;
- repeating the procedure, with cycle in steps defined by the operator, upon completion of the angle scan on the directions of illumination required.

**Patentansprüche**

**1.** Vorrichtung zum Messen des Streulichtes in elektrooptischen Vorrichtungen der Bauart mit einer oder mehreren geometrischen Einfallsöffnungen und mit einer oder mehreren Detektorebenen, wobei die Vorrichtung aufweist:

- einen Träger (3) zum Tragen einer elektrooptischen Vorrichtung (D), an der die Messungen durchzuführen sind, wobei der Träger (3) um zumindest eine Achse dreht,
- eine Lichtquelle (1),
- ein Abtastsystem (7) zur Bewegung entsprechend zumindest zwei Abtastachsen (X, Y) eines Lichtstrahls (F), der durch die Lichtquelle (1) erzeugt wird, mit Bezug auf die Vorrichtung (D), wobei das Abtastsystem (7) zwischen den Trägern (3) und der Lichtquelle (1) positioniert ist, wobei das Abtastsystem (7) so ausgebildet ist, um die ganze Öffnung der zu testenden elektrooptischen Vorrichtungen (D) oder einen Teil davon mit dem Lichtstrahl (F) abzutasten,
- Elementen (43) zwischen der Lichtquelle (1) und dem Abtastsystem zum Variieren des Durchmessers des Lichtstrahls derart, dass die Dimension des Querschnitts des Lichtstrahls (F) durch den Bediener eingestellt werden kann, um eine gröbere oder feinere Abtastung durchzuführen, wobei die Elemente zum Verändern des Durchmessers des Lichtstrahls aufweisen: einen Strahlaufweiter (37) mit einem Kondensor (39), einen Kollimator (4) und ein Raumfilter (41), das zwischen dem Kondensor (39) und dem Kollimator (43) angeordnet ist, und eine Blende (45) mit variablem Durchmesser.

**2.** Vorrichtung nach Anspruch 1, wobei: der Träger (3) zum Tragen der zu prüfenden elektrooptischen Vorrichtung (D) eine rotierende Plattform ist, wobei zwischen der Lichtquelle (1) und der rotierenden Plattform (3) eine Gruppe von Komponenten (5) angeordnet ist, die die Funktion der Konditionierung des optischen Strahls aufweisen, der von der Lichtquelle (1) abgegeben wird, wobei zwischen der Gruppe (5) und der Vorrichtung (D), an der die Messung durchzuführen ist, ein Abtastkopf (7) positioniert ist.

**3.** Vorrichtung nach Anspruch 1 oder 2, wobei das Abtastsystem (7) zwei orthogonale Abtastachsen aufweist, um den Lichtstrahl (F) in einer Abtastebene zu bewegen.

**4.** Vorrichtung nach Anspruch 3, wobei das Abtastsystem (7) den Strahl (F) parallel zu sich selbst hält und im Wesentlichen rechtwinklig zur Abtastebene.

**5.** Vorrichtung nach einem oder mehreren der vorstehenden Ansprüche, wobei das Abtastsystem (7) ein paar Reflexionsflächen (9A, 9B) aufweist, die entlang von zwei Abtastachsen bewegbar sind.

**6.** Vorrichtung nach Anspruch 5, wobei ein erster Schlitten das Paar von Reflexionsflächen (9A, 9B) trägt und entlang einer ersten Translationsachse bewegbar ist, die im Wesentlichen parallel ist zur Einfallsrichtung des Lichtstrahls (F), der von der Lichtquelle (1), auf die erste der Reflexionsflächen kommt, und wobei eine zweite der Reflexionsflächen mit Bezug auf die erste Reflexionsfläche entlang einer zweiten Translationsachse bewegbar ist.

**7.** Vorrichtung nach Anspruch 6, wobei die erste und die zweite Translationsachse im Wesentlichen rechtwinklig sind.

**8.** Vorrichtung nach einem oder mehreren der vorstehenden Ansprüche, wobei die Lichtquelle (1) mit Bezug auf eine Struktur, die den Träger lagert, fest ist.

**9.** Vorrichtung nach einem oder mehreren der vorstehenden Ansprüche, wobei die Quelle (1) eine Laserquelle ist.

**10.** Vorrichtung nach einem oder mehreren der vorstehenden Ansprüche, wobei die Lichtquelle (1) austauschbar ist.

**11.** Vorrichtung nach einem oder mehreren der vorstehenden Ansprüche, mit einer oder mehreren der folgenden Komponenten: ein System von Filtern zwischen der Quelle und dem Abtastsystem, einem Polarisiersystem (25) zwischen der Quelle und dem Abtastsystem, einer Steuergruppe (31) zum Steuern der Stabilität der Quelle.

**12.** Vorrichtung nach einem oder mehreren der vorstehenden Ansprüche, mit einem Apodisierungsfilter (49), das zwischen der Lichtquelle (81) und dem Abtastsystem (7) angeordnet ist.

**13.** Vorrichtung nach einem oder mehreren der vorstehenden Ansprüche, wobei die Blende mit variablem Durchmesser motorbetrieben ist.

**14.** Vorrichtung nach Anspruch 12, wobei die Blende (45) mit variablem Durchmesser mit dem Apodisierungsfilter (49) verbunden ist, wobei die Position des Apodisierungsfilters (49) abhängig vom Durchmesser der Apertur der Blende (45) einstellbar ist.

**15.** Vorrichtung nach einem oder mehreren der vorstehenden Ansprüche, wobei die Komponenten der Vorrichtung derart angeordnet sind, dass eine Messung des Strahlungswertes am Lichtstrahl (F) durchgeführt wird, der stromab des untersuchenden Instruments (D) abgegeben wird.

**16.** Verfahren zur Durchführung von Streulichtmessungen an elektrooptischen Vorrichtungen der Bauart mit einer oder mehreren geometrischen Einfallsöffnungen und mit einer oder mehreren Detektorebenen mit einer Vorrichtung gemäß einem oder mehreren der vorstehenden Ansprüche mit den Schritten:

- Abtasten der gesamten im Test befindlichen Vorrichtung oder eines Teils davon mit einem Lichtstrahl von angemessenen Abmessungen,
- für jede Position des Lichtstrahls detektieren, ob Streulichtphänomene innerhalb der Vorrichtung erzeugt werden,

wobei die Abmessung des Querschnittes des Strahls durch den Bediener derart eingestellt wird, um eine gröbere oder eine feinere Abtastung durchzuführen, wobei eine erste grobe Abtastung mit einem Strahl größerer Querabmessungen in einer ersten Phase durchgeführt wird, um das Auftreten von Streulichtphänomen zu Überprüfen, und wobei, falls Streulichtphänomene vorhanden sind, der Teil der Eingangsöffnung der Vorrichtung entsprechend dem Abschnitt des Strahls, der in der ersten Phase verwendet wird, mit einer feineren Abtastung untersucht wird unter Verwendung eines Strahls mit geringerem Querschnitt zur Erfassung mit größerer Genauigkeit der Position und der Orientierung des Strahls, der Anlass für die Erzeugung von Streulicht gibt, und damit den Ursprung zur Erzeugung von Streulicht zu lokalisieren.

**17.** Verfahren nach Anspruch 16 mit den folgenden Schritten:

- Positionieren der zu überprüfenden elektrooptischen Vorrichtung (D) auf einer rotierenden motorbetriebenen Plattform (R) und die in einem ersten nutzbaren Winkel innerhalb des Intervalls der interessierenden Winkel Werte $\theta$ und $\pi$ angeordnet ist,
- mit fixierten Richtungen der Überprüfung des einfallenden Lichtes durch den Automatismus, der mit einem Computer verknüpft ist, Abtasten der gesamten Öffnung der Vorrichtung (D) durch die Zwischenfügung X/Y von rechten Prismen (9A, 9B) oder anderen reflektierenden Vorrichtungen des Abtastkopfes (7),
- für jede der Positionen X/Y des Strahls (F) das Speichern einer Strahlungsmatrix oder eines Felds oder eines Punkts entsprechend der Art des verwendeten Detektors,
- Addieren der Strahlungsmatrix an der momentanen Position X/Y des Strahls (F) zu den Matrizen, die in anderen Positionen erhalten werden, und Normieren der Anzahl der überprüften Positionen und des Strahlungswertes des Strahls, der stromab des prüfenden Instruments abgegeben wird,
- Bestimmung der Messung des SPST des Systems bei den momentanen Beleuchtungswinkeln als die resultierende Matrix-"Summe" oder "Konvolution" der Matrizen relativ zu jeder Position,
- Wiederholung des Vorgangs mit Zyklen in Schritten, die durch den Bediener definiert werden, bis zur Vervollständigung der Winkelabtastung an den erforderlichen Beleuchtungsrichtungen.

## Revendications

**1.** Appareil pour mesurer la lumière parasite dans des dispositifs électro-optiques du type avec une ou plusieurs ouvertures d’entrée géométriques et avec un ou plusieurs plans de détection, ledit appareil comprenant :

- un support (3) pour supporter un dispositif électro-optique (D) sur lequel les mesures doivent être effectuées, ledit support (3) tournant autour d’au moins un axe ;

- une source de lumière (1) ;
- un système de balayage (7) pour déplacer, selon au moins deux axes de balayage (X, Y), un faisceau de lumière (F) produit par ladite source (1) par rapport au dispositif (D), ledit système de balayage (7) étant positionné entre ledit support (3) et ladite source de lumière (1), ledit système de balayage (7) étant conçu pour balayer toute l'ouverture du dispositif électro-optique (D) en cours d'essai, ou une partie de celle-ci, avec ledit faisceau de lumière (F) ;
- entre ladite source de lumière (1) et ledit système de balayage, des organes (43) pour faire varier le diamètre du faisceau de lumière, de sorte que la dimension de la coupe transversale du faisceau (F) puisse être réglée par l'opérateur, afin d'effectuer un balayage plus grossier ou plus fin, lesdits organes pour faire varier le diamètre du faisceau de lumière comprenant : un élargisseur de faisceau (37) avec un condensateur (39), un collimateur (4) et un filtre spatial (41) agencé entre le condensateur (39) et le collimateur (43) ; et un iris (45) avec un diamètre variable.

**2.** Appareil selon la revendication 1, dans lequel :

ledit support (3) pour supporter le dispositif électro-optique (D) en cours d'essai est une plate-forme rotative ;
entre ladite source de lumière (1) et ladite plate-forme rotative (3), il est positionné un groupe de composants (5) dont la fonction est de conditionner le faisceau optique sortant de ladite source (1) ;
entre ledit groupe (5) et ledit dispositif (D) sur lequel la mesure doit être prise, il est positionné une tête de balayage (7).

**3.** Appareil selon la revendication 1 ou 2, dans lequel ledit système de balayage (7) comprend deux axes de balayage orthogonaux, pour déplacer le faisceau de lumière (F) dans un plan de balayage.

**4.** Appareil selon la revendication 3, dans lequel ledit système de balayage (7) maintient le faisceau (F) parallèle à lui-même et sensiblement orthogonal au plan de balayage.

**5.** Appareil selon une ou plusieurs des revendications précédentes, dans lequel le système de balayage (7) comprend une paire de surfaces réfléchissantes (9A, 9B) pouvant être déplacées le long de deux axes de balayage.

**6.** Appareil selon la revendication 5, dans lequel une première glissière supporte ladite paire de surfaces réfléchissantes (9A, 9B) et peut être déplacée le long d'un premier axe de translation, sensiblement parallèle à la direction d'incidence dudit faisceau (F) provenant de la source de lumière (1) sur une premières desdites surfaces réfléchissantes, et dans lequel une deuxième desdites surfaces réfléchissantes peut être déplacée par rapport à ladite première surface réfléchissante le long d'un deuxième axe de translation.

**7.** Appareil selon la revendication 6, dans lequel ledit premier axe de translation et ledit deuxième axe de translation sont sensiblement orthogonaux.

**8.** Appareil selon une ou plusieurs des revendications précédentes, dans lequel ladite source de lumière (1) est fixe par rapport à une structure portant ledit support.

**9.** Appareil selon une ou plusieurs des revendications précédentes, dans lequel ladite source de lumière (1) est une source laser.

**10.** Appareil selon une ou plusieurs des revendications précédentes, dans lequel ladite source de lumière (1) est interchangeable.

**11.** Appareil selon une ou plusieurs des revendications précédentes, comprenant un ou plusieurs des composants suivants : un système de filtres entre la source et le système de balayage, un système polariseur (25) entre la source et le système de balayage, un groupe de régulation (31) pour réguler la stabilité de la source.

**12.** Appareil selon une ou plusieurs des revendications précédentes, comprenant un filtre d'apodisation (49) agencé entre ladite source de lumière (81) et ledit système de balayage (7).

**13.** Appareil selon une ou plusieurs des revendications précédentes, dans lequel ledit iris de diamètre variable est motorisé.

**14.** Appareil selon la revendication 12, dans lequel ledit iris (45) de diamètre variable est relié au dit filtre d'apodisation (49), la position du filtre d'apodisation (49) pouvant être ajustée en fonction du diamètre de l'ouverture de l'iris (45).

**15.** Appareil selon une ou plusieurs des revendications précédentes, dans lequel les composants de l'appareil sont agencés de telle manière qu'une mesure de la valeur de rayonnement est effectuée sur le faisceau de lumière (F) émergeant en aval de l'instrument étudié (D).

**16.** Procédé pour prendre des mesures de lumière parasite sur des dispositifs électro-optiques, du type avec une ou plusieurs ouvertures d'entrée géométriques et avec un ou plusieurs plans de détection, avec un appareil selon une ou plusieurs des revendications précédentes, comprenant les étapes de :

- le balayage de toute l'ouverture du dispositif en cours d'essai ou d'une partie de celui-ci, avec un faisceau de lumière de dimensions adéquates,
- pour chaque position du faisceau de lumière, la détection si des phénomènes de lumière parasite sont générés à l'intérieur du dispositif,

dans lequel la dimension de la coupe transversale du faisceau est réglée par l'opérateur, afin d'effectuer un balayage plus grossier et plus fin, un premier balayage grossier étant effectué avec un faisceau de dimensions transversales supérieures dans une première phase pour contrôler la survenance de phénomènes de lumière parasite ; et dans lequel, si des phénomènes de lumière parasite sont présents, la portion de l'ouverture d'entrée du dispositif correspondant à la coupe du faisceau utilisé dans ladite première phase est étudiée avec un balayage plus fin, en utilisant un faisceau avec une coupe transversale plus petite, afin d'identifier avec plus de précision la position et l'orientation du faisceau engendrant la génération de lumière parasite et ainsi localiser le facteur à l'origine de ladite lumière parasite.

**17.** Procédé selon la revendication 16, comprenant les étapes suivantes :

- le positionnement du dispositif électro-optique (D) en cours d'essai sur une plate-forme motorisée rotative (R) et positionnée au premier angle utile à l'intérieur de l'intervalle des valeurs angulaires $\theta$ et $\phi$ d'intérêt ;
- en ayant fixé les directions d'exploration de la lumière incidente, par le biais de l'automatisme verrouillé sur un ordinateur, le balayage de toute l'ouverture du dispositif (D) est effectué par le biais des verrouillages X/Y de prismes droits (9A, 9B) ou d'autres dispositifs réfléchissants d'une tête de balayage (7) ;
- pour chacune des positions X/Y du faisceau (F), le stockage d'une matrice d'irradiance, ou d'un réseau ou d'un point selon le type de détecteur utilisé ;
- l'ajout de la matrice d'irradiance aux positions actuelles X/Y du faisceau (F) aux matrices obtenues à d'autres positions et la normalisation du nombre de positions explorées et de la valeur de rayonnement du faisceau émergeant en aval de l'instrument étudié ;
- la détermination de la mesure du SPST du système aux angles d'illumination actuels en tant que la « somme » ou « convolution » de matrice résultante des matrices par rapport à chaque position ;
- la répétition de la procédure, avec un cycle d'étapes défini par l'opérateur, à la fin du balayage d'angle sur les directions d'illumination nécessaires.

Fig.1
X
AI
φ
Z
Z
θ
Y
F
D
Y'
Z
X'
PD

(STATE OF THE ART)
Fig. 2
C2
C1
PH
L
Z
RP
Z
D
A

Fig.3
1
5
7
A
D
Z
Z
A
3

7
9B
F
Y
X
Z
Ly
F
9A
F
Lx
1/5
As

Fig. 4

F
9B
13
F
Ly
11
F
9A
Lx

Fig. 4A

Fig.5
1
5
7
21
21A
23
25
25A
27
29
31
33
35
37
39
41
43
45
47
49
F
F1
F49

R
DM
(A)
51
Fig. 6
51
R
dm
(B)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 102006019468 B3
- DE 10332110 A1


### Non-patent literature cited in the description


- **BLARRE.** Characterization of optical system. *Specification, production, and testing of optical components and systems 13-16 May 1996 Glasgow, UK,* 1996, vol. 2775, 279-286
- **L. BLARRE ; A. MESTREAU.** Stray Light characterization of optical systems. *SPIE,* vol. 2775, 279
- **Y. TSUSAHA et al.** characterization of the advanced satellite for cosmology and astrophysics X-ray telescope : preflight calibration and testing. *Appl. Optics,* 1995, vol. 34 (22), 4848